# EUROPÄISCHE PATENTSCHRIFT

(11) **EP 3 594 610 B1**
(45) Veröffentlichungstag und Bekanntmachung des Hinweises auf die Patenterteilung: **16.03.2022**
(21) Anmeldenummer: 19174426.7
(22) Anmeldetag: 14.05.2019
(51) Int. Cl.: B64C 3/38, B64C 5/06, F42B 10/64

(54) **FLUGKÖRPER**
MISSILE
MISSILE

(30) Priorität: 11.07.2018 DE 102018005480
(43) Veröffentlichungstag der Anmeldung: 15.01.2020
(73) Patentinhaber: MBDA Deutschland GmbH, 86529 Schrobenhausen (DE)
(72) Erfinder: Klaffert, Thomas, 85356 Freising (DE); Kroyer, Robert, 81925 München (DE)
(74) Vertreter: Isarpatent

(56) Entgegenhaltungen:
- WO-A1-2010/099228
- DE-A1-102005 059 370
- DE-A1-102010 033 639
- GB-A- 722 842
- US-A- 2 643 833
- US-A- 5 143 320

## Beschreibung

Die vorliegende Erfindung betrifft einen unbemannten Flugkörper, wie z.B. einen Marschflugkörper oder dergleichen, welcher für Fluggeschwindigkeiten im Überschallbereich ausgelegt ist.

Unbemannte Flugkörper werden typischerweise zu Aufklärungszwecken oder zu Abwehrzwecken eingesetzt. Hierzu werden diese von einer Basis aus gestartet und auf eine bestimmte Fluggeschwindigkeit, die häufig im Überschallbereich liegt, beschleunigt.

Um eine Flugrichtung des Flugkörpers zu beeinflussen oder zu korrigieren, sind an einem Rumpf des Flugkörpers üblicherweise Steuerruder zur gesteuerten Anstellung vorgesehen, wie beispielsweise in WO 2010/099228 A1 beschrieben.

Durch diese Steuerruder ist sowohl im Unterschallbereich als auch im transsonischen Bereich bis hin zu Überschallbereichen niedriger Machzahlen in Flughöhen vom Boden bis in die Stratosphäre zumeist eine hinreichende aerodynamische Steuerbarkeit gegeben. Obwohl sich Querschnittsprofile der Steuerruder auch vorteilhaft für Überschallanströmungen auslegen lassen, ist deren Wirksamkeit mit wachsender Machzahl profilabhängig teils eingeschränkt bzw. je nach vorhandener Struktursteifigkeit und -festigkeit begrenzt.

Andere aus dem allgemeinen Stand der Technik bekannte Steuerungsmöglichkeiten basieren auf einer neigbaren Flugkörperspitze. Diese Systeme eignen sich typischerweise für hohe Machzahlen und werden zumeist durch ein weiteres Stellsystem ergänzt, das die Steuerung bis zur Erreichung der geforderten Machzahl übernimmt.

Weiterhin ist beispielsweise aus US 5 143 320 A1 bekannt, einen Überschall-Lenkflugkörper mittels ausfahrbarer Spoiler und dem sich hierbei im Bereich des Spoiler ergebenden Strömungswiderstandes zu steuern.

Ferner ist es allgemein bekannt, aerodynamische Steuersysteme teilweise durch eine Schubvektorsteuerung zu ersetzen oder im Interesse einer gesteigerten Agilität ergänzen. Für derartige Schubvektorsteuerung wird ein über den gesamten Missionsverlauf kontinuierlich arbeitendes Marschtriebwerk benötigt. Wird darüber hinaus eine Rollstabilisierung des Flugkörpers gefordert, wird diese typischerweise durch ein separates Stellprinzip realisiert.

Es ist Aufgabe der vorliegenden Erfindung, ein verbessertes Richtungssteuerungskonzept für einen Flugkörper bereitzustellen. Diese Aufgabe wird jeweils durch einen Flugkörper mit den Merkmalen des Anspruchs 1 gelöst.

Erfindungsgemäß ist ein unbemannter Flugkörper, welcher für Fluggeschwindigkeiten im Überschallbereich ausgelegt ist, vorgesehen. Der Flugkörper weist zumindest zwei Steuerruder auf, welche jeweils mittels einer ersten Antriebseinrichtung um eine sich quer zu einer Flugkörperlängsachse erstreckende Drehachse drehbar sind. Die Steuerruder weisen jeweils ein erstes Blattsegment und ein zweites Blattsegment auf, wobei die Blattsegmente entgegengesetzt zueinander gelegene Strömungsflächen eines Querschnittsprofils des jeweiligen Steuerruders zumindest teilweise ausbilden. Die Blattsegmente sind mittels einer zweiten Antriebseinrichtung jeweils um einen Drehpol relativ zueinander zur Veränderung des Querschnittsprofils bewegbar.

Erfindungsgemäß sind demnach Steuerruder vorgesehen, die einerseits als Ganzes um eine Drehachse drehbar sind und deren Querschnitt bzw. deren Querschnittsdicke unabhängig von der Drehstellung um die Drehachse durch ein Aufspreizen oder Ausklappen von Blattsegmenten veränderbar ist. Hierzu sind den Querschnitt definierende Wandungen des Steuerruders ganz oder teilweise durch bewegbar angeordnete Blattsegmente, also platten- oder schalenförmige oder profilierte flächige Bauteile, ausgebildet. Diese Blattsegmente bilden Strömungsoberflächen des Steuerruders, also abhängig von der Anströmung beispielsweise eine Druck- oder eine Saugseite, wobei die Strömungsoberflächen in Bezug auf eine Ruderlängsebene, in welcher die Drehachse gelegen ist, entgegengesetzt zueinander gelegen bzw. orientiert sind. Die Blattsegmente sind insbesondere derart relativ zueinander bewegbar, dass ein Abstand und/oder ein Winkel zwischen den durch die Blattsegmente gebildeten Strömungsoberflächen veränderbar ist, also vergrößert oder verkleinert werden kann. Die Bewegung der Blattsegmente um einen Drehpol, kann um einen relativ zu der Drehachse des Steuerruders ortsfester Drehpol oder einen bewegten, virtuellen Drehpol erfolgen, beispielsweise bei Verwendung einer Hebelkinematik oder einer Anordnung von Führungsschienen. Ferner kann jedes der Blattsegmente um einen eigenen Drehpol bewegt werden oder es können beide Blattsegmente um einen gemeinsamen Drehpol bewegt werden.

Durch die Drehbarkeit der Steuerruder kann eine effiziente aerodynamische Steuerung durch Änderung der Drehstellung bzw. Ruderanstellwinkel, bei niedrigen Geschwindigkeiten auch mit großen Ruderanstellwinkeln, erfolgen. Durch die aufspreizbare, um einen Drehopl verschwenkbare Anordnung der Blattsegmente, kann der Querschnitt und damit der Widerstandsbeiwert der einzelnen Steuerruder unabhängig von deren Drehstellung verändert werden, da verschiedene, unabhängige Antriebseinrichtungen vorgesehen sind. Die Wirksamkeit des in Folge der Stellung der Blattsegmente geänderten Strömungswiderstands nimmt aufgrund aero-thermoelastischer Effekte im Überschallbereich zu, wodurch zusätzliche Lenkmomente auch im Überschallbereich in effizienter Weise erzeugbar sind. Besonders vorteilhaft wirkt sich bei diesem Konzept aus, dass zur Herbeiführung einer Lenkbewegung infolge der Überlagerung von Drehstellung des Steuerruders und Spreizung der Blattsegmente eine günstigere Verteilung der Belastungen auf mehrere Steuerruder ergibt als bei klassischen Ruderstellsystemen.

Die erfindungsgemäßen Steuerruder sind vorteilhaft für eine Vielzahl von Steuerungsaufgaben einsetzbar, wie beispielsweise eine Fluglagestabilisierung des Flugkörpers durch zustandsabhängig gezielt einstellbaren Widerstand der Steuerruder mittels gezielter Spreizung der Blattsegmente, optional aller Steuerruder. Ferner kann beispielsweise eine Rollstabilisierung oder eine Rollfrequenzsteuerung in allen Flugzuständen durch zyklische Kombination der Stellmöglichkeiten Drehen des Steuerruders und Spreizen der Blattsegmente in einfacher Weise realisiert werden.

Ein weiterer Vorteil liegt darin, dass alle steuerungstechnischen Eingriffsmöglichkeiten an ein und derselben Stelle des Flugkörpers erfolgen, nämlich an dem jeweiligen Steuerruder bzw. an der Anordnung der zumindest zwei Steurruder. Somit wird ein äußerst kompaktes Stellsystem realisiert.

Vorteilhafte Ausgestaltungen und Weiterbildungen ergeben sich aus den auf die unabhängigen Ansprüche rückbezogenen Unteransprüchen in Verbindung mit der Beschreibung.

Gemäß einer Ausführungsform ist vorgesehen, dass die Blattsegmente einen keilförmigen Querschnitt aufweisen. Demnach sind die Blattsegmente als Platten ausgeführt, die eine keilförmige, also spitz zulaufende Querschnittsform aufweisen. Eine Keilspitze ist hierbei einer Vorderkante des Steuerruders zugewandt oder bildet diese aus. Keilförmige Querschnitte sind insbesondere im Überschallbereich aerodynamisch vorteilhaft.

Gemäß einer weiteren Ausführungsform bilden die Blattsegmente gemeinsam einen keilförmigen Querschnittsbereich des Querschnittsprofils des jeweiligen Steuerruders aus. Auch hier ergeben sich insbesondere im Überschallbereich aerodynamische Vorteile.

Gemäß einer weiteren Ausführungsform ist vorgesehen, dass die Blattsegmente in einer Grundposition einen bezüglich einer Ruderlängsebene, in welcher die Drehachse gelegen ist, symmetrischen Querschnittsbereich des Querschnittsprofils des jeweiligen Steuerruders ausbilden. In der Grundposition sind die durch die Blattsegmente gebildeten Strömungsoberflächen in einem kleinstmöglichen Abstand zueinander angeordnet, wodurch sich eine kleinstmögliche Querschnittsdicke des Querschnittsprofils des Steuerruders ergibt. Durch die symmetrische Anordnung der Blattsegmente wird der Widerstandsbeiwert in der Grundposition vorteilhaft verringert. Ferner wird die mechanische Belastung der Blattsegmente verringert.

Gemäß einer weiteren Ausführungsform bilden die Blattsegmente das Querschnittsprofil des jeweiligen Steuerruders zwischen einer Vorderkante und einer entgegengesetzt zu dieser gelegenen Hinterkante insgesamt aus. Gemäß dieser Ausführungsform wird die gesamte Strömungsoberfläche des jeweiligen Steuerruders durch die Blattsegmente bereitgestellt bzw. die Blattsegmente alleine definieren das Querschnittsprofil des Steuerruders. Die Vorderkante kann hierbei insbesondere als eine aerodynamisch wirksame Kante, beispielsweise als ein Staupunkt, verstanden werden. Ein Vorteil dieser Ausführungsform liegt im einfachen konstruktiven Aufbau und in der minimalen Anzahl an Teilen, was vorteilhaft zu einem geringen Gewicht führt. Ferner kann eine durchgehende, aerodynamisch saubere Strömungsfläche ohne Spalte oder dergleichen bereitgestellt werden.

Optional sind das erste und das zweite Blattsegment einstückig miteinander ausgebildet und über elastisch verformbare Strukturgelenke relativ zueinander verschwenkbar. Beispielsweise kann hierbei ein Grundkörper vorgesehen, der den Bereich der Vorderkante ausbildet, wobei an den Grundkörper entgegengesetzt zu der Vorderkante plattenförmige Blattkörper angeformt sind, welche gegenüber dem Grundkörper elastisch auslenkbar sind. In diesen Fall ist jeder der Blattkörper um einen eigenen, virtuellen Drehpol verschwenkbar. Ein Vorteil der einstückigen oder integralen Ausbildung der Blattsegmente liegt darin, dass zur Realisierung der Bewegbarkeit der Blattsegmente keine bewegten Teile notwendig sind, da lediglich eine elastische Verformung für die Bewegbarkeit sorgt. Dies führt zu einem einfachen Aufbau und hoher Zuverlässigkeit.

Alternativ hierzu können das erste und das zweite Blattsegment mittels einer Drehgelenkeinrichtung relativ zueinander verschwenkbar sein. Hierbei sind das erste und das zweite Blattsegment jeweils um eine, vorzugsweise ein gemeinsame Schwenkachse schwenkbar. Die Schwenkachse kann insbesondere im Bereich der Vorderkante angeordnet sein und bildet einen Drehpol. Diese Ausführungsform bietet den Vorteil, dass eine sehr starke Vergrößerung der Querschnittsdicke möglich ist.

Gemäß einer weiteren Ausführungsform weisen die Steuerruder zusätzlich jeweils einen Strukturkörper auf, welcher eine Vorderkante des Steuerruders bildet, wobei die Blattsegmente an dem Strukturkörper gelagert sind. Der zusätzliche Strukturkörper, welcher beispielsweise keil- oder plattenförmig gestaltet sein kann, bildet vorteilhaft eine mechanisch stabile Befestigungsstruktur für die Blattsegmente. Vorzugsweise ist der Strukturkörper selbst um die Drehachse drehbar gelagert und durch die erste Antriebseinrichtung bewegbar.

Insbesondere kann das erste Blattsegment mittels einer ersten Drehgelenkeinrichtung und das zweite Blattsegment mittels einer zweiten Drehgelenkeinrichtungen an den Strukturkörper angelenkt sein. Auf diese Weise kann die erzielbare Querschnittsdicke des Querschnittsprofils des jeweiligen Steuerruders weiter vergrößert werden.

Optional sind die Blattsegmente an einem entgegengesetzt zur Vorderkante gelegenen Endbereich des Strukturkörpers angelenkt. Dadurch werden die Blattsegmente zu der insbesondere im Überschallbereich thermisch hochbelasteten Vorderkante beabstandet. Somit wird die thermische Last auf die Blattsegmente vorteilhaft verringert.

Gemäß einer weiteren Ausführungsform ist vorgesehen, dass der Strukturkörper eine Längserstreckung des jeweiligen Steuerruders zwischen der Vorderkante und einer entgegengesetzt zu dieser gelegenen Hinterkante definiert, wobei die Blattsegmente in Bezug auf die Längserstreckung zwischen der Vorderkante und der Hinterkante angeordnet sind. Auch bei dieser Gestaltung werden die Blattsegmente vorteilhaft thermisch entlastet.

Gemäß einer weiteren Ausführungsform ist eine der Vorderkante des Steuerruders zugewandte Blattvorderkante des jeweiligen Blattsegments jeweils in einer Vertiefung des Strukturkörpers gelegen. Hierbei sind die Vorderkanten der Blattsegmente jeweils in eine Vertiefung, die beispielsweise durch eine den Querschnitt des Strukturkörpers verringernden Stufe gebildet sein kann, eingelassen. Dadurch wird insbesondere im Unterschallbereich der Strömungswiderstand des Steuerruders verringert.

Gemäß einer weiteren Ausführungsform ist vorgesehen, dass die jeweilige erste Antriebseinrichtung über eine die Drehachse definierende, als Hohlwelle ausgeführte erste Welle an das jeweilige Steuerruder gekoppelt ist, und dass die jeweilige zweite Antriebseinrichtung über eine koaxial in der ersten Welle angeordnete zweite Welle an die Blattsegmente gekoppelt ist. Dadurch, dass die zweite Welle innerhalb der die erste Welle bildenden Hohlwelle aufgenommen ist, wird vorteilhaft ein besonders kompakter Aufbau realisiert.

Gemäß einer Ausführungsform sind die erste und der zweite Antriebseinrichtung jeweils als Elektromotoren realisiert. Alternativ können auch hydraulische oder pneumatische Aktuatoren verwendet werden. Ferner sind auch Piezoaktuatoren als Antriebseinrichtungen denkbar. Allgemein sind die erste und die zweite Antriebseinrichtung unabhängig voneinander betätigbar und als separate Aktuatoren ausgebildet.

Gemäß einer weiteren Ausführungsform ist vorgesehen, dass der Flugkörper ein Triebwerk aufweist, das dazu eingerichtet ist, den Flugkörper auf Überschallgeschwindigkeit zu beschleunigen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Hierin wird unter "einstückig", "einteilig", "integral" oder "in einem Stück" ausgebildeten Komponenten allgemein verstanden, dass diese Komponenten als ein einziges, eine Materialeinheit bildendes Teil vorliegen und insbesondere als ein solches hergestellt sind, wobei die eine von der anderen Komponente nicht ohne Aufhebung des Materialzusammenhalts von der anderen lösbar ist.

Im Folgenden wird die Erfindung unter Bezugnahme auf die Figuren der Zeichnungen erläutert. Von den Figuren zeigen:
- Fig. 1: eine schematische Seitenansicht eines Flugkörpers gemäß einem Ausführungsbeispiel der vorliegenden Erfindung;
- Fig. 2: eine Detailansicht des durch den Buchstaben Z gekennzeichneten Bereichs des in der Fig. 1 gezeigten Flugkörpers;
- Fig. 3: eine vereinfachte Schnittansicht, die sich in der in Fig. 2 eingezeichneten Blickrichtung V ergibt;
- Fig. 4: eine Draufsicht auf den in Fig. 2 gezeigten Bereich, die sich in der in Fig. 2 eingezeichneten Blickrichtung W ergibt;
- Fig. 5: eine schematische Schnittansicht eines Steuerruders eines Flugkörpers gemäß einem Ausführungsbeispiel der vorliegenden Erfindung;
- Fig. 6: eine schematische Schnittansicht eines Steuerruders eines Flugkörpers gemäß einem weiteren Ausführungsbeispiel der vorliegenden Erfindung;
- Fig. 7: eine schematische Schnittansicht eines Steuerruders eines Flugkörpers gemäß einem weiteren Ausführungsbeispiel der vorliegenden Erfindung; und
- Fig. 8: eine schematische Schnittansicht eines Steuerruders eines Flugkörpers gemäß einem weiteren Ausführungsbeispiel der vorliegenden Erfindung.

In den Figuren bezeichnen dieselben Bezugszeichen gleiche oder funktionsgleiche Komponenten, soweit nichts Gegenteiliges angegeben ist.

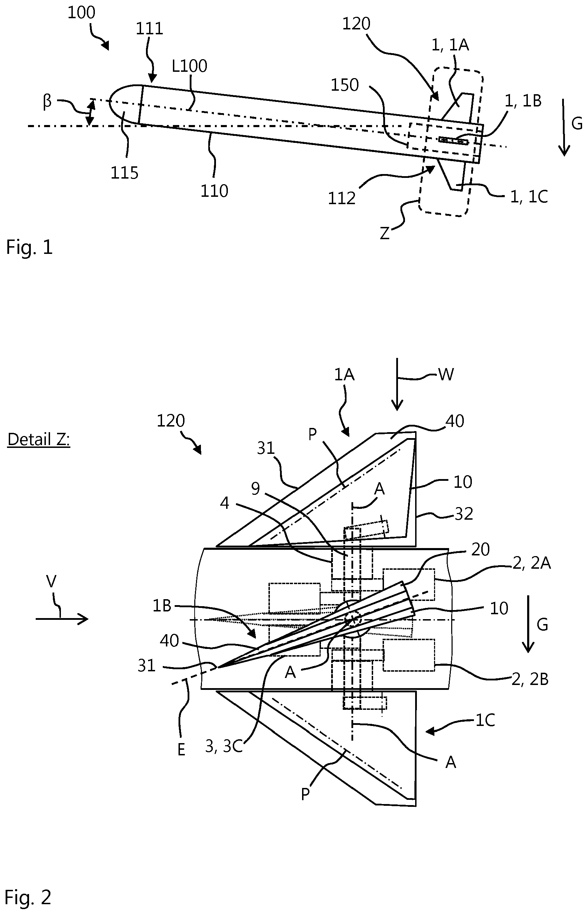

Fig. 1 zeigt eine beispielhafte Seitenansicht eines unbemannten Flugkörpers 100. Der Flugkörper 100 weist einen Rumpf 110, eine Steueranordnung 120 und ein optionales Triebwerk 150 auf. Das Triebwerk 150 kann insbesondere dazu eingerichtet sein, den Flugkörper 100 auf Überschallgeschwindigkeit zu beschleunigen.

Der Rumpf 110 definiert eine Flugkörperlängsachse L100. Der Rumpf 110 kann insbesondere ein hülsenförmige, länglicher Körper sein und ist zur Aufnahme von Nutzlasten, wie z.B. Sensoren, Sprengladungen oder dergleichen vorgesehen. Optional ist an einem ersten Endbereich 111 des Rumpfs 110 ein Suchkopf 115 angeordnet, in welchem beispielsweise ein Navigationssystem aufgenommen sein kann. Die Steueranordnung 120 kann insbesondere in einem in Bezug auf die Flugkörperlängsachse L100 entgegengesetzt zu dem ersten Endbereich 111 gelegenen zweiten Endbereich 112 des Rumpfs 110 angeordnet sein, wie dies in Fig. 1 beispielhaft dargestellt ist. Jedoch ist auch denkbar, dass die Steueranordnung 120 in einem anderen Bereich des Rumpfs 110 zwischen dem ersten und dem zweiten Endbereich 111, 112 angeordnet ist.

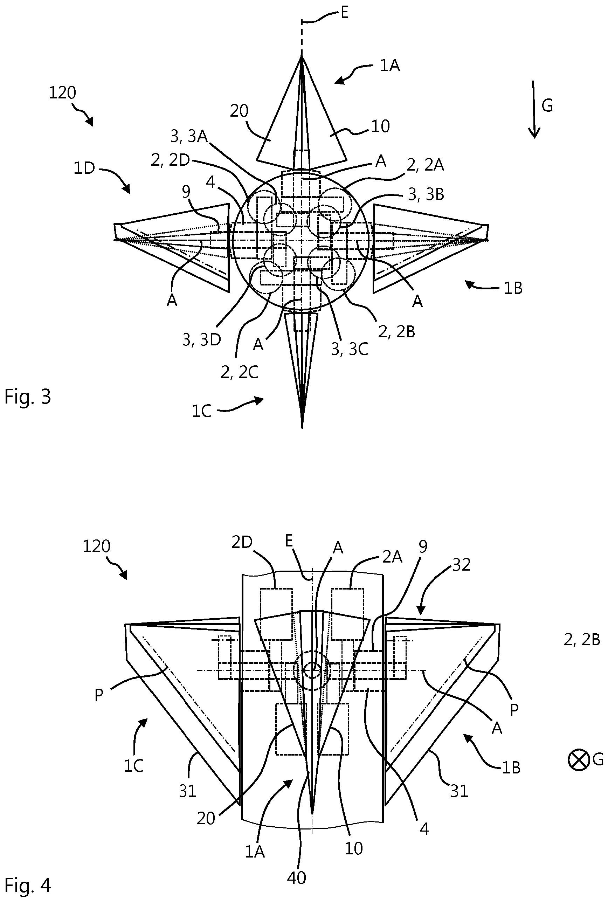

Die Steueranordnung 120 weist zumindest zwei Steuerruder 1 auf. In den Fign. 1 bis 4 ist beispielhaft eine Steueranordnung 120 mit insgesamt vier Steuerrudern 1A, 1B, 1C, 1D gezeigt. Wie insbesondere in Fig. 3 erkennbar ist, sind die Steuerruder 1A, 1B, 1C, 1D vorzugsweise mit regelmäßigen Winkelabständen zueinander entlang einer Umfangsrichtung des Rumpfs 110 beabstandet. Dies kann allgemein, unabhängig von der Anzahl der Steuerruder 1 der Fall sein. Die Steuerruder 1 sind ferner alle an einer bestimmten Längsposition des Rumpfes 110 des Flugkörpers 100 angeordnet, beispielsweise in dem zweiten Endbereich 112 des Rumpfs 110, wie in Fig. 1 beispielhaft dargestellt.

Die Steueranordnung 120 weist ferner erste Antriebseinrichtungen 2 und zweite Antriebseinrichtungen 3 auf, wobei jedem Steuerruder 1A, 1B, 1C, 1D jeweils eine erste Antriebseinrichtung 2A, 2B, 2C, 2D und eine zweite Antriebseinrichtung 3A, 3B, 3C, 3D zugeordnet ist. Die ersten und die zweiten Antriebseinrichtungen 2, 3 können beispielsweise als Elektromotoren, als hydraulische oder pneumatische Aktuatoren oder als Piezoaktuatoren ausgeführt sein. Wie in Fig. 3 schematisch dargestellt ist, sind die ersten und die zweiten Antriebseinrichtungen 2, 3 in einem Innenraum des Rumpfs 110 angeordnet.

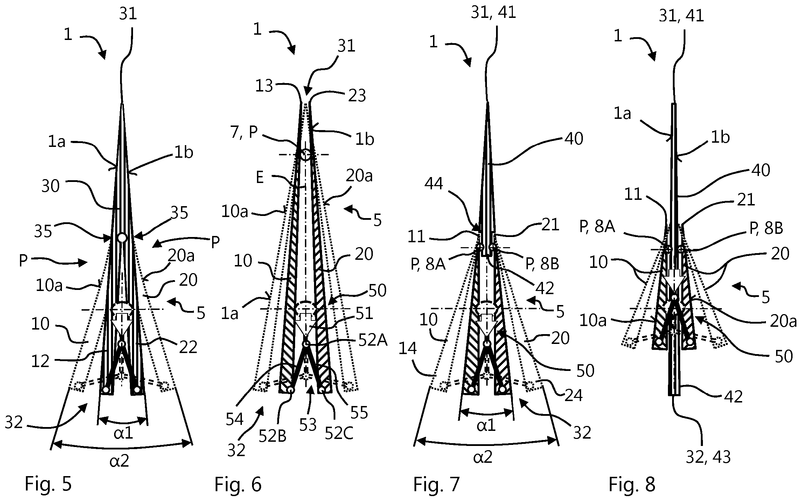

Wie insbesondere in den Fign. 5 bis 8 gezeigt ist, weisen die Steuerruder 1 jeweils ein erstes Blattsegment 10 und ein zweites Blattsegment 20 auf. Optional kann zusätzlich ein Strukturkörper 40 vorgesehen sein. Das Steuerruder 1 bildet einen Strömungskörper mit einer Vorderkante 31 und einer entgegengesetzt zu dieser gelegenen Hinterkante 32 aus. Ein Querschnittsprofil des Steuerruders 1 wird zumindest teilweise durch die Blattsegmente 10, 20 ausgebildet. Insbesondere bildet eine erste Oberfläche 10a des ersten Blattsegments 10 ganz oder teilweise eine erste Strömungsoberfläche la des Steuerruders 1 und eine erste Oberfläche 20a des zweiten Blattsegments 20 bildet ganz oder teilweise eine zweite Strömungsoberfläche 1b des Steuerruders 1. Wie insbesondere in den Fign. 5 bis 8 gezeigt ist, sind die Strömungsflächen la, 1b entgegengesetzt zueinander gelegen bzw. entgegengesetzt zueinander orientiert.

Die Steuerruder 1 sind jeweils um eine Drehachse A drehbar an dem Flugkörper 100 bzw. an dem Rumpf 110 gelagert. Die Drehachse A erstreckt sich hierbei quer zu der Flugkörperlängsachse L100. In Fig. 2 ist das Steuerruder 1B in gepunkteter Linie in einer Grundstellung dargestellt. In dieser erstreckt sich eine Ruderlängsebene E, in welcher die Drehachse A gelegen ist, parallel zu der Flugkörperlängsachs L100 oder die Ruderlängsachse L100 ist in der Ruderlängsebene E gelegen. Mittels der ersten Antriebseinrichtung 2 ist das Steuerruder 1 um die Drehachse A drehbar. In Fig. 2 ist das Steuerruder 1B in voller Linie in einer Drehstellung dargestellt. Bei einer Anströmung des Strömungskörpers 1 an der Vorderkante 31 kann durch diese Drehung eine Richtungsänderung des Flugkörpers 100 bewirkt werden.

Zusätzlich zu der drehbaren Lagerung der Steuerruder 1 sind die Blattsegmente 10, 20 mittels der zweiten Antriebseinrichtung 3 jeweils um einen Drehpol P relativ zueinander zur Veränderung des Querschnittsprofils bewegbar. Wie in den Fign. 5 bis 8 erkennbar ist, sind die Blattsegmente 10, 20 insbesondere derart bewegbar, dass ein Abstand und/oder ein Winkel zwischen den ersten Oberflächen 10a, 20a der Blattsegmente 10, 20 variierbar ist. Dadurch kann eine Querschnittsdicke bzw. die Querschnittsform des Querschnittsprofils des jeweiligen Steuerruders 1 unabhängig von dessen Drehstellung verändert werden, was eine zusätzliche Steuerungsmöglichkeit bietet.

In den Fign. 5 bis 8 sind die Blattsegmente 10, 20 in voller Linie jeweils in einer Grundstellung dargestellt, in welcher deren erste Oberflächen 10a, 20a einen kleinstmöglichen Abstand zueinander aufweisen bzw. in welcher die erste Oberflächen 10a, 20a unter einem ersten Winkel α1 zueinander angeordnet sind. Eine Spreizstellung ist in den Fign. 5 bis 8 als gepunktete Linie dargestellt. In der Spreizstellung sind ersten Oberflächen 10a, 20a in einem größeren Abstand zueinander angeordnet als in der Grundposition bzw. sind die erste Oberflächen 10a, 20a unter einem zweiten Winkel α2, der größer als der erste Winkel α1 ist, zueinander angeordnet. Die Bewegung zwischen der Grundstellung und der Spreizstellung erfolgt hierbei um einen Drehpol P. Beispielsweise können beide Blattsegmente 10, 20 um denselben Drehpol oder jeweils um einen eigenen Drehpol bewegt werden. Es kann sich jeweils um einen festen oder einen virtuellen, bewegten Drehpol handeln. In den Fign. 2 und 4 ist beispielhaft ein fester Drehpol P in Form einer sich entlang der Vorderkante 31 des Steuerruders 1 erstreckenden Drehachse eingezeichnet. Diese den Drehpol P bildende Achse kann beispielsweise auch parallel zu der Drehachse A verlaufen.

Die Blattsegmente 10, 20 können insbesondere einen keilförmigen Querschnitt aufweisen, wie dies beispielhaft in den Fign. 6, 7 und 8 dargestellt ist. Es ist jedoch auch denkbar, die Blattsegmente 10, 20 mit rechteckförmigem Querschnitt zu realisieren. In den Fig. 5 bis 8 ist beispielhaft gezeigt, dass die Blattsegmente 10, 20 jeweils in der Grundstellung als auch in der Spreizstellung symmetrisch in Bezug auf die Ruderlängsebene E angeordnet sind. Insbesondere bei einer Anströmung entlang der Ruderlängsebene E bietet ein durch die Blattsegmente 10, 20 ausgebildeter symmetrischer Querschnittsbereich 5 des Querschnittsprofils den Vorteil einer gleichmäßigen Umströmung und damit einer verringerten mechanischen Belastung. Es kann jedoch vorgesehen sein, dass die Blattsegmente 10, 20 zumindest in der Spreizposition oder Spreizstellung asymmetrisch in Bezug auf die Ruderlängsebene E angeordnet sind.

Bei den in den Fign. 5 und 6 beispielhaft dargestellten Steuerrudern 1 bilden die Blattsegmente 10, 20 das Querschnittsprofil des jeweiligen Steuerruders 1 zwischen der Vorderkante 31 und einer entgegengesetzt zu dieser gelegenen Hinterkante 32 insgesamt aus. Mit anderen Worten wird hierbei die erste Strömungsoberfläche la des Steuerruders 1 komplett durch die erste Oberfläche 10a des ersten Blattsegments 10 ausgebildet und die zweite Strömungsoberfläche 1b des Steuerruders 1 wird komplett durch die erste Oberfläche 20a des zweiten Blattsegments 20 ausgebildet.

In Fig. 5 sind das erste und das zweite Blattsegment 10, 20 einstückig miteinander ausgebildet und über elastisch verformbare Strukturgelenke 35 relativ zueinander verschwenkbar. Das in Fig. 5 beispielhaft gezeigte Steuerruder 1 weist einen keilförmigen, die Vorderkante 31 bildenden Basisabschnitt 30, einen ersten Blattabschnitt 12 und einen zweiten Blattabschnitt 22 auf. Die Blattabschnitte 12, 22 sind jeweils plattenförmig gestaltet und getrennt voneinander jeweils an einen entgegengesetzt zu der Vorderkante 31 gelegenen Endbereich des Basisabschnitts 30 angeformt. Ein Übergangsbereich zwischen dem Basisabschnitt 30 und dem jeweiligen Blattabschnitt 12, 22 weist einen verringerten Querschnitt auf, wodurch jeweils ein Strukturgelenk 35 gebildet wird. Dieses Strukturgelenk 35 ist aufgrund des verringerten Querschnitts elastisch verformbar, sodass die Blattabschnitte 12, 22 relativ zueinander bewegbar sind, wie dies in Fig. 5 durch die punktierte Linie dargestellt ist. Ein jeweiliger Drehpol P wird hierbei durch das Strukturgelenk P und die Materialeigenschaften der Abschnitte 12, 22, 35 definiert und kann insbesondere auch außerhalb der durch die Abschnitte 12, 22, 35 gebildeten Struktur gelegen sein.

Bei dem in Fig. 6 beispielhaft dargestellten Steuerruder 1 sind das erste und das zweite Blattsegment 10, 20 mittels einer Drehgelenkeinrichtung 7 relativ zueinander verschwenkbar. In diesem Fall bildet die Drehgelenkeinrichtung 7 den Drehpol P in Form einer festen Schwenkachse aus, um welche beide Blattsegmente 10, 20 schwenkbar sind. In Fig. 6 sind die Blattsegmente 10, 20 beispielhaft keilförmig ausgebildet. Wie in Fig. 6 erkennbar, können Vorderkanten 13, 23 der Blattsegmente 10, 20 in der Grundstellung der Blattsegmente 10, 20 beabstandet zueinander gelegen sein. Bei zunehmenden Machzahlen bilden diese Vorderkanten 13, 23 aufgrund sehr dicht beieinander liegender Verdichtungsstöße eine gemeinsame aerodynamisch wirksame Vorderkante 31 aus.

In den Fign. 7 und 8 sind die Blattsegmente 10, 20 jeweils an dem optionalen Strukturkörper 40 gelagert, insbesondere an entgegengesetzten Seiten des Strukturkörpers 40. Der Strukturkörper 40 bildet eine Vorderkante 31 des Steuerruders 1 und kann beispielsweise mit keilförmigem, wie beispielhaft in Fig. 7 dargestellt, trapezförmigem, wie beispielhaft in Fig. 8 dargestellt, oder rechteckförmigem Querschnitt ausgebildet sein. Vorzugsweise ist das erste Blattsegment 10 mittels einer ersten Drehgelenkeinrichtung 8A und das zweite Blattsegment 20 mittels einer zweiten Drehgelenkeinrichtungen 8B an den Strukturkörper 40 angelenkt ist. Dadurch wird jeweils ein eigener Drehpol P für jedes Blattsegment 10, 20 bereitgestellt. Die Blattsegmente 10, 20 sind in den Fign. 7 und 8 beispielhaft keilförmig dargestellt.

Wie in Fig. 7 beispielhaft dargestellt ist, können die Blattsegmente 10, 20 an einem entgegengesetzt zur Vorderkante 31 gelegenen Endbereich 42 des Strukturkörpers 40 angelenkt sein. Wie in Fig. 7 weiterhin dargestellt ist, bilden in diesem Fall von dem Endbereich 42 des Strukturkörpers 40 abgewandt gelegene Endbereiche 14, 24 der Blattsegmente 10, 20 eine Hinterkante 32 des Steuerruders 1.

Bei dem in Fig. 7 beispielhaft gezeigten Steuerruder 1 ist der Endbereich 42 des Strukturkörpers 40 durch eine den Querschnitt des Strukturkörpers 40 verringernde Stufe abgesetzt. Eine der Vorderkante 31 des Steuerruders 1 zugewandte Blattvorderkante 11, 21 des jeweiligen Blattsegments 10, 20 ist auf einer der Vorderkante 41 des Strukturkörpers 40 abgewandten Seite der Stufe angeordnet. Die Stufe bildet eine Vertiefung 44 des Strukturkörpers 40 aus, in welcher die jeweilige Blattvorderkante 11, 21 gelegen ist. Die Blattvorderkante 11, 21 des jeweiligen Blattsegments 10, 20 kann somit generell jeweils in einer Vertiefung 44 des Strukturkörpers 40 gelegen sein.

Bei dem in Fig. 8 beispielhaft gezeigten Steuerruder 1 definiert der Strukturkörper 40 eine Längserstreckung des Steuerruders 1 zwischen der Vorderkante 31, 41 und einer entgegengesetzt zu dieser gelegenen Hinterkante 32, 43. Mit anderen Worten bildet der Strukturkörper 40 optional sowohl die Vorderkante 31 als auch die Hinterkante 32 des Steuerruders 1 aus. Im Unterschied zu Fig. 7 sind in Fig. 8 die Blattsegmente 10, 20 in Bezug auf die Längserstreckung zwischen der Vorderkante 41 und der Hinterkante 43 des Strukturkörpers 40 angeordnet.

In den Fign. 6 bis 8 sind die Blattsegmente 10, 20 jeweils keilförmig ausgebildet. In Fig. 6 ist das Steuerruder 1 insgesamt keilförmig ausgebildet. In Fig. 7 ist der Strukturkörper 40 keilförmig ausgebildet und der durch die Blattsegmente 10, 20 gebildete Querschnittsbereich 5 des Steuerruders 1 ist ebenfalls keilförmig ausgebildet. In Fig. 8 ist der Strukturkörper 40 trapezförmig ausgebildet und der durch die Blattsegmente 10, 20 gebildete Querschnittsbereich 5 des Steuerruders 1 ist keilförmig ausgebildet. Im Allgemeinen kann somit vorgesehen sein, dass die Blattsegmente 10, 20 gemeinsam zumindest einen keilförmigen Querschnittsbereich 5 des Querschnittsprofils des jeweiligen Steuerruders 1 ausbilden.

Die Blattsegmente 10, 20 sind über eine Kinematik 50 an eine im Folgenden noch näher erläuterte zweite Welle 9 gekoppelt, wobei die zweite Welle 9 an die zweite Antriebseinrichtung 3 gekoppelt ist. Die Kinematik 50 ist in den Fig. 5 bis 8 lediglich symbolisch dargestellt und kann beispielsweise einen Spindeltrieb 51 aufweisen, an welchen axial verschiebbar ein zentrales Gelenk 52A eines Kniehebels 53 gekoppelt ist. Der Kniehebel 53 umfasst einen ersten Stab 54, welcher an das zentrale Gelenk 52A und an ein an dem ersten Blattsegment 10 vorgesehenes erstes Gelenk 52B gekoppelt ist, und einen zweiten Stab 55, welcher an das zentrale Gelenk 52A und an ein an dem ersten Blattsegment 20 vorgesehenes zweites Gelenk 52C gekoppelt ist. Alternativ kann die Kinematik 50 auch eine Nockenanordnung oder dergleichen zum Bewegen der Blattsegmente 10, 20 zwischen der Grundstellung und der Spreizstellung aufweisen. Die Kinematik 50 ist somit allgemein dazu eingerichtet, eine die Blattsegmente 10, 20 durch eine Antriebswelle, die an die zweite Antriebseinrichtung 3 gekoppelt ist, bereitgestellte Bewegung zwischen der Grundstellung und der Spreizstellung zu bewegen.

Wie insbesondere in Fig. 3 erkennbar ist, ist jedem Steuerruder 1A, 1B, 1C, 1D jeweils eine erste Antriebseinrichtung 2A, 2B, 2C, 2D und jeweils eine zweite Antriebseinrichtung 3A, 3B, 3C, 3D zugeordnet. Diese sind unabhängig voneinander zur Drehung des Steuerruders 1 bzw. zur Betätigung der Blattsegmente 10, 20 ansteuerbar. Wie in Fig. 3 weiter erkennbar ist, kann vorgesehen sein, dass die ersten Antriebseinrichtungen 2A, 2B, 2C, 2Djeweils über eine die Drehachse A definierende, als Hohlwelle ausgeführte erste Welle 4 an das jeweilige Steuerruder 1A, 1B, 1C, 1D gekoppelt sind. Ferner können die zweiten Antriebseinrichtungen 3A, 3B, 3C, 3D über jeweils eine koaxial in der ersten Welle 4 angeordnete zweite Welle 9 an die Blattsegmente 10, 20 gekoppelt sein, beispielsweise mithilfe der oben beschriebenen Kinematik 50. Wie in Fig. 3 erkennbar ergibt sich auf diese Weise eine besonders kompakte Anordnung der Wellen 4, 9 sowie der zugehörigen Antriebseinrichtungen 2, 3.

Einige der Vorteile der beschriebenen Steueranordnung 150 werden nachfolgenden am Beispiel eines Flugmanövers zur Erhöhung eines Flugkörper-Anstellwinkels β näher erläutert. Zur Erhöhung des Flugkörper-Anstellwinkels β müssen bei dem in den Fig. 1 bis 4 beispielhaft dargestellten Flugkörper 100 die Vorderkanten 31 beider waagerechten Steuerruder 1B und 1D um die Drehachse A bezüglich der Schwerkraft G mittels den zugehörigen ersten Antriebseinrichtungen 2B, 2D nach unten geschwenkt werden. Um dieses Lenkkommando auch bei hohen Fluggeschwindigkeiten wirksam zu unterstützen, können bei dem oberen Steuerruder 1A die Blattsegmente 10, 20 mittels der zugehörigen zweiten Antriebseinrichtung 3A aus der Grundstellung in die Spreizstellung bewegt werden, um den Strömungswiderstand des oberen Steuerruders 1A gezielt zu erhöhen. Gleichzeitig werden die Blattsegmente 10, 20 des unteren gegenüberliegenden Steuerruder 1C in die Grundstellung gebracht bzw. in dieser gehalten, wodurch dessen Strömungswiderstand minimiert wird. Diese Situation ist in Fig. 3 in voller Linie dargestellt. Das aus den an den beiden Steuerrudern 1A und 1C unterschiedlichen Strömungswiderständen entstehende Kräftepaar bewirkt ein zusätzliches Lenkmoment in dieselbe Richtung wie die in den Fig. 2 und 3 als volle Linie dargestellte Anstellung des waagerechten Paars der Steuerruder 1B und 1D. Dieser Synergieeffekt wird zusätzlich begünstigt, wenn das Paar der Steuerruder 1A und 1C, annähernd in Anströmrichtung zeigt. Diese Steuerruder 1A und 1C werden vorteilhaft vorwiegend in deren steifer Längsrichtung, also entlang der Ruderlängsebene E belastet. Dadurch und in Verbindung mit der optionalen Symmetrie der Blattsegmente 10, 20 bezüglich der Ruderlängsebene E können die Steuerruder 1A und 1C in dieser momentanen Ruderposition stets höhere mechanische und thermische Lasten aufnehmen. Diese sich vorteilhaft ergebende Aufteilung und Überlagerung aller mechanischen und thermischen Lasten trifft in Analogie für jede momentane Rollposition des Flugkörpers zu.

Je nach Flugzustand und Fluggeschwindigkeit ist das Wirkungsverhältnis zwischen beiden kombinierten Lenkprinzipien, nämlich Drehung des Steuerruders 1 um die Drehachse A und Spreizung der Blattsegmente 10, 20, stets optimal abstimmbar. Um die Flugsteuerung zu vereinfachen, kann das jeweilige Optimum auch per Simulation im Voraus für einen bestimmten Flugverlauf berechenbar. Die Ergebnisse können beispielsweise als Steuerbefehle im Speicher einer Steuerungseinrichtung (nicht dargestellt), welche an die Antriebseinrichtungen 2, 3 funktional gekoppelt ist, hinterlegt werden. Die Ergebnisse der Simulation können dann ab dem Flugkörperstart geschwindigkeitsabhängig bzw. bei bekanntem Beschleunigungsverlauf zeitabhängig abgefragt werden.

Obwohl die vorliegende Erfindung vorstehend anhand von Ausführungsbeispielen exemplarisch erläutert wurde, ist sie darauf nicht beschränkt, sondern auf vielfältige Weise modifizierbar. Insbesondere sind auch Kombinationen der voranstehenden Ausführungsbeispiele denkbar.

### BEZUGSZEICHENLISTE

- 1, 1A-C: Steuerruder
- la: erste Strömungsoberfläche des Steuerruders
- 1b: zweite Strömungsoberfläche des Steuerruders
- 2, 2A-C: erste Antriebseinrichtung
- 3, 3A-C: zweite Antriebseinrichtung
- 4: erste Welle
- 5: Querschnittsbereich
- 7: Drehgelenkeinrichtung
- 8A, 8B: Drehgelenkeinrichtungen
- 9: zweite Welle
- 10: erstes Blattsegment
- 10a: erste Oberfläche des ersten Blattsegments
- 11: Blattvorderkante des ersten Blattsegments
- 12: erster Blattabschnitt
- 13: Vorderkante des ersten Blattsegments
- 14: Endbereich des ersten Blattsegments
- 35: Strukturgelenke
- 20: zweites Blattsegment
- 20a: erste Oberfläche des zweiten Blattsegments
- 21: Blattvorderkante des zweiten Blattsegments
- 22: zweiter Blattabschnitt
- 23: Vorderkante des zweiten Blattsegments
- 24: Endbereich des zweiten Blattsegments
- 30: Basisabschnitt
- 31: Vorderkante des Steuerruders
- 32: Hinterkante des Steuerruders
- 40: Strukturkörper
- 41: Vorderkante des Strukturkörpers
- 42: Endbereich des Strukturkörpers
- 43: Hinterkante des Strukturkörpers
- 44: Stufe des Strukturkörpers
- 50: Kinematik
- 51: Spindeltrieb
- 52A: zentrales Gelenk
- 52B: erstes Gelenk
- 52C: zweites Gelenk
- 53: Kniehebel
- 54: erster Stab
- 55: zweiter Stab
- 100: Flugkörper
- 110: Rumpf
- 111: erster Endabschnitt des Rumpfs
- 112: zweiter Endabschnitt des Rumpfs
- 120: Steueranordnung
- 150: Triebwerk
- A: Drehachse
- α1: erster Winkel
- a2: zweiter Winkel
- β: Flugkörper-Anstellwinkels
- E: Ruderlängsebene
- G: Schwerkraft
- L100: Flugkörperlängsachse
- P: Drehpol
- V: Blickrichtung
- W: Blickrichtung

## Patentansprüche

1. Unbemannter Flugkörper (100), welcher für Fluggeschwindigkeiten im Überschallbereich ausgelegt ist, mit:
zumindest zwei Steuerrudern (1), welche jeweils mittels einer ersten Antriebseinrichtung (2) um eine sich quer zu einer Flugkörperlängsachse (L100) erstreckende Drehachse (A) drehbar sind;
wobei die Steuerruder (1) jeweils ein erstes Blattsegment (10) und ein zweites Blattsegment (20) aufweisen;
wobei die Blattsegmente (10; 20) entgegengesetzt zueinander gelegene Strömungsoberflächen (la; 1b) eines Querschnittsprofils des jeweiligen
Steuerruders (1) zumindest teilweise ausbilden;
**dadurch gekennzeichnet, dass**
die Blattsegmente (10; 20) mittels einer zweiten Antriebseinrichtung (3) jeweils um einen Drehpol (P) relativ zueinander zur Veränderung des Querschnittsprofils bewegbar sind.

2. Flugkörper (100) nach Anspruch 1, wobei die Blattsegmente (10; 20) einen keilförmigen Querschnitt aufweisen.

3. Flugkörper (100) nach Anspruch 1 oder 2, wobei die Blattsegmente gemeinsam einen keilförmigen Querschnittsbereich (5) des Querschnittsprofils des jeweiligen Steuerruders (1) ausbilden.

4. Flugkörper (100) nach einem der voranstehenden Ansprüche, wobei die Blattsegmente (10; 20) in einer Grundposition einen bezüglich einer Ruderlängsebene (E), in welcher die Drehachse gelegen ist, symmetrischen Querschnittsbereich (5) des Querschnittsprofils des jeweiligen Steuerruders (1) ausbilden.

5. Flugkörper (100) nach einem der voranstehenden Ansprüche, wobei die Blattsegmente (10; 20) das Querschnittsprofil des jeweiligen Steuerruders (1) zwischen einer Vorderkante (31) und einer entgegengesetzt zu dieser gelegenen Hinterkante (32) insgesamt ausbilden.

6. Flugkörper (100) nach Anspruch 5, wobei das erste und das zweite Blattsegment (10; 20) einstückig miteinander ausgebildet und über elastisch verformbare Strukturgelenke (35) relativ zueinander verschwenkbar sind.

7. Flugkörper (100) nach Anspruch 5, wobei das erste und das zweite Blattsegment (10; 20) mittels einer Drehgelenkeinrichtung (7) relativ zueinander verschwenkbar sind.

8. Flugkörper (100) nach einem der Ansprüche 1 bis 4, wobei die Steuerruder (1) zusätzlich jeweils einen Strukturkörper (40) aufweisen, welcher eine Vorderkante (31) des Steuerruders (1) bildet, wobei die Blattsegmente (10; 20) an dem Strukturkörper (40) gelagert sind.

9. Flugkörper (100) nach Anspruch 8, wobei das erste Blattsegment (10) mittels einer ersten Drehgelenkeinrichtung (8A) und das zweite Blattsegment (20) mittels einer zweiten Drehgelenkeinrichtungen (8B) an den Strukturkörper (40) angelenkt ist.

10. Flugkörper (100) nach Anspruch 9, wobei die Blattsegmente (10; 20) an einem entgegengesetzt zur Vorderkante (31) gelegenen Endbereich (42) des Strukturkörpers (40) angelenkt sind.

11. Flugkörper (100) nach Anspruch 9, wobei der Strukturkörper (40) eine Längserstreckung des jeweiligen Steuerruders (1) zwischen der Vorderkante (31; 41) und einer entgegengesetzt zu dieser gelegenen Hinterkante (32; 43) definiert, und wobei die Blattsegmente (10; 20) in Bezug auf die Längserstreckung zwischen der Vorderkante (31; 41) und der Hinterkante (32; 43) angeordnet sind.

12. Flugkörper (100) nach einem der Ansprüche 9 bis 11, wobei eine der Vorderkante (31, 41) des Steuerruders (1) zugewandte Blattvorderkante (11; 21) des jeweiligen Blattsegments (10; 20) jeweils in einer Vertiefung (44) des Strukturkörpers (40) gelegen ist.

13. Flugkörper (100) nach einem der voranstehenden Ansprüche, wobei die jeweilige erste Antriebseinrichtung (2) über eine die Drehachse (A) definierende, als Hohlwelle ausgeführte erste Welle (4) an das jeweilige Steuerruder (1) gekoppelt ist, und wobei die jeweilige zweite Antriebseinrichtung (3) über eine koaxial in der ersten Welle (4) angeordnete zweite Welle (9) an die Blattsegmente gekoppelt ist.

14. Flugkörper (100) nach einem der voranstehenden Ansprüche, wobei der Flugkörper (100) ein Triebwerk (150) aufweist, das dazu eingerichtet ist, den Flugkörper (100) auf Überschallgeschwindigkeit zu beschleunigen.

## Claims

1. Unmanned missile (100) configured for airspeeds in the supersonic range, comprising:
at least two rudders (1) which are each rotatable about an axis of rotation (A) extending transverse to a missile longitudinal axis (L100) by means of a first drive device (2) ;
the rudders (1) each having a first blade segment (10) and a second blade segment (20);
the blade segments (10; 20) in each case forming, at least in part, mutually opposite flow surfaces (1a; 1b) of a cross-sectional profile of the associated rudder (1);
**characterised in that**
the blade segments (10; 20) are in each case movable relative to one another about a centre of rotation (P) by means of a second drive device (3) to change the cross-sectional profile.

2. Missile (100) according to claim 1, wherein the blade segments (10; 20) have a wedge-shaped cross section.

3. Missile (100) according to either claim 1 or claim 2, wherein the blade segments together form a wedge-shaped cross section region (5) of the cross-sectional profile of the associated rudder (1).

4. Missile (100) according to any of the preceding claims, wherein in a base position the blade segments (10; 20) form a cross section region (5), which is symmetrical about a rudder longitudinal plane (E) in which the axis of rotation lies, of the cross-sectional profile of the associated rudder (1).

5. Missile (100) according to any of the preceding claims, wherein the blade segments (10; 20) form, as a whole, the cross-sectional profile of the associated rudder (1) between a leading edge (31) and an opposite trailing edge (32) .

6. Missile (100) according to claim 5, wherein the first and the second blade segment (10; 20) are formed integrally with one another and are pivotable relative to one another by way of resiliently deformable structural joints (35).

7. Missile (100) according to claim 5, wherein the first and the second blade segment (10; 20) are pivotable relative to one another by way of a swivel joint device (7).

8. Missile (100) according to any of claims 1 to 4, wherein the rudders (1) additionally each have a structure body (40) which forms a leading edge (31) of the rudder (1), the blade segments (10; 20) being mounted on the structure body (40) .

9. Missile (100) according to claim 8, wherein the first blade segment (10) is articulated via a first rotary joint device (8A) and the second blade segment (20) via a second rotary joint device (8B) to the structure body (40).

10. Missile (100) according to claim 9, wherein the blade segments (10; 20) are articulated to an end region (42), opposite the leading edge (31), of the structure body (40).

11. Missile (100) according to claim 9, wherein the structure body (40) defines a longitudinal extent of the associated rudder (1) between the leading edge (31; 41) and an opposite trailing edge (32; 43), and wherein the blade segments (10; 20) are arranged between the leading edge (31; 41) and the trailing edge (32; 43) with respect to the longitudinal extent.

12. Missile (100) according to any of claims 9 to 11, wherein a blade leading edge (11; 21), facing the leading edge (31, 41) of the rudder (1), of the associated blade segment (10; 20) is positioned in a depression (44) in the structure body (40) in each case.

13. Missile (100) according to any of the preceding claims, wherein each first drive device (2) is coupled to the associated rudder (1) via a first shaft (4), which defines the axis of rotation (A) and is configured as a hollow shaft, and wherein each second drive device (3) is coupled to the blade segments via a second shaft (9) arranged coaxially in the first shaft (4).

14. Missile (100) according to any of the preceding claims, wherein the missile (100) has an engine (150) set up to accelerate the missile (100) to supersonic speed.

## Revendications

1. Missile sans pilote (100), qui est conçu pour des vitesses de vol supersoniques, avec :
au moins deux gouvernes (1) qui peuvent tourner chacune autour d'un axe de rotation (A) s'étendant transversalement à un axe longitudinal de missile (L100) au moyen d'un premier dispositif d'entraînement (2) ;
dans lequel les gouvernes (1) présentent chacune un premier segment de pale (10) et un deuxième segment de pale (20) ;
dans lequel les segments de pale (10 ; 20) forment au moins partiellement des surfaces d'écoulement (1a ; 1b) situées à l'opposé l'une de l'autre d'un profil de section transversale de la gouverne respective (1) ;
**caractérisé en ce que**
les segments de pale (10 ; 20) peuvent être déplacés l'un par rapport à l'autre autour d'un pôle de rotation (P) au moyen d'un deuxième dispositif d'entraînement (3) pour modifier le profil de section transversale.

2. Missile (100) selon la revendication 1, dans lequel les segments de pale (10 ; 20) présentent une section transversale en forme de coin.

3. Missile (100) selon la revendication 1 ou 2, dans lequel les segments de pale forment ensemble une zone de section transversale (5) en forme de coin du profil de section transversale de la gouverne respective (1).

4. Missile (100) selon l'une des revendications précédentes, dans lequel les segments de pale (10 ; 20) forment, dans une position de base, une zone de section transversale (5), symétrique par rapport à un plan longitudinal de gouverne (E) dans lequel est situé l'axe de rotation, du profil de section transversale de la gouverne respective (1).

5. Missile (100) selon l'une des revendications précédentes, dans lequel les segments de pale (10 ; 20) forment au total le profil de section transversale de la gouverne respective (1) entre un bord d'attaque (31) et un bord de fuite (32) situé à l'opposé de celui-ci.

6. Missile (100) selon la revendication 5, dans lequel le premier et le deuxième segment de pale (10 ; 20) sont formés d'une seule pièce l'un avec l'autre et peuvent pivoter l'un par rapport à l'autre au moyen d'articulations structurelles (35) déformables élastiquement.

7. Missile (100) selon la revendication 5, dans lequel le premier et le deuxième segment de pale (10 ; 20) peuvent pivoter l'un par rapport à l'autre au moyen d'un dispositif d'articulation tournant (7).

8. Missile (100) selon l'une des revendications 1 à 4, dans lequel les gouvernes (1) présentent en outre chacune un corps structurel (40) qui forme un bord d'attaque (31) de la gouverne (1), dans lequel les segments de pale (10 ; 20) sont montés sur le corps structurel (40).

9. Missile (100) selon la revendication 8, dans lequel le premier segment de pale (10) est articulé sur le corps structurel (40) au moyen d'un premier dispositif d'articulation tournant (8A) et le deuxième segment de pale (20) au moyen d'un deuxième dispositif d'articulation tournant (8B).

10. Missile (100) selon la revendication 9, dans lequel les segments de pale (10 ; 20) sont articulés à une zone d'extrémité (42) du corps structurel (40) située à l'opposé du bord d'attaque (31).

11. Missile (100) selon la revendication 9, dans lequel le corps structurel (40) définit une extension longitudinale de la gouverne respective (1) entre le bord d'attaque (31 ; 41) et un bord de fuite (32 ; 43) situé à l'opposé de celui-ci, et dans lequel les segments de pale (10 ; 20) sont disposés entre le bord d'attaque (31 ; 41) et le bord de fuite (32 ; 43) par rapport à l'extension longitudinale.

12. Missile (100) selon l'une des revendications 9 à 11, dans lequel chaque bord d'attaque de pale (11 ; 21), tourné vers le bord d'attaque (31 ; 41) de la gouverne (1), du segment de pale respectif (10 ; 20) est situé dans un renfoncement (44) du corps structurel (40).

13. Missile (100) selon l'une des revendications précédentes, dans lequel le premier dispositif d'entraînement respectif (2) est couplé à la gouverne respective (1) par l'intermédiaire d'un premier arbre (4) définissant l'axe de rotation (A) et réalisé sous la forme d'un arbre creux, et dans lequel le deuxième dispositif d'entraînement respectif (3) est couplé aux segments de pale par l'intermédiaire d'un deuxième arbre (9) disposé coaxialement dans le premier arbre (4).

14. Missile (100) selon l'une des revendications précédentes, dans lequel le missile (100) présente un moteur (150) qui est conçu pour accélérer le missile (100) à une vitesse supersonique.
